Europäisches Patentamt

**European Patent Office**

**Office européen des brevets**

(11) Veröffentlichungsnummer: **0 354 396**
**A2**

(12) **EUROPÄISCHE PATENTANMELDUNG**

(21) Anmeldenummer: **89113412.4**

(22) Anmeldetag: **21.07.89**

(51) Int. Cl.⁴: **H04M 11/02 , H04Q 7/02**

(30) Priorität: **11.08.88 DE 3827212**

(43) Veröffentlichungstag der Anmeldung:
**14.02.90 Patentblatt 90/07**

(84) Benannte Vertragsstaaten:
**CH DE GB LI NL SE**

(71) Anmelder: **ANT Nachrichtentechnik GmbH**
**Gerberstrasse 33**
**D-7150 Backnang(DE)**

(72) Erfinder: **Sperlich, Josef, Dipl.-Ing.**
**Kelterweg 52**
**D-7150 Backnang(DE)**

(54) **Personenfunkrufsystem.**

(57) Es wurde bereits vorgeschlagen, Personenfunkrufzentralen an ein Nachrichtenvermittlungsnetz (ISDN) mit einem zentralen Zeichengabekanal anzuschließen. Dabei sollen alle Signalisierungsinformationen innerhalb des Netzes über diesen zentralen Zeichengabekanal übertragen werden. Um für den Personenfunkruf die Übertragungskanäle des Nachrichtenvermittlungsnetzes möglichst wenig zu beanspruchen, wird der vorhandene zentrale Zeichengabekanal für die Übertragung sowohl von Signalisierungsinformation als auch von Rufinformation, die für den gerufenen Personenrufempfänger bestimmt ist, benutzt.

EP 0 354 396 A2

## Personenfunkrufsystem

Die vorliegende Erfindung betrifft ein Personenfunkrufsystem, das mindestens eine Personenfunkrufzentrale mit mindestens einem daran angeschlossenen Funkrufsender und mehrere Personenfunkrufempfänger aufweist, wobei die Personenfunkrufzentrale mit einem Nachrichtenvermittlungsnetz in Verbindung steht, das einen zentralen Zeichengabekanal besitzt, über den die jeweilige Personenfunkrufzentrale von zum Nachrichtenvermittlungsnetz gehörenden Vermittlungsstellen, an denen für Rufeingaben geeignete Teilnehmergeräte angeschlossen sind, Signalisierungsinformationen erhält.

Ein derartiges Personenfunkrufsystem ist aus Bosch Technische Berichte 8 (1986/-) 1/2, S. 83-89 bekannt. In dieser Veröffentlichung wird die Einbindung eines Personenfunkrufdienstes in ein integriertes Text- und Datennetz, das einen von der CCITT empfohlenen zentralen Zeichengabekanal aufweist, beschrieben. Dieser zentrale Zeichengabekanal soll dazu dienen, Signalisierungsinformationen innerhalb des Netzes getrennt von den eigentlichen Nachrichtenkanälen (Sprach-, Datenkanäle) zu übertragen, um diese zu entlasten. Während also über den zentralen Zeichengabekanal die Signalisierungsinformation, das ist beim Personenfunkruf z.B. die Nummer des gerufenen Personenfunkrufempfängers, übertragen wird, werden für den Personenfunkrufempfänger bestimmte Rufinformationen (z.B. die Nummer des rückzurufenden Teilnehmers) über einen Nachrichtenkanal übertragen.

Der Erfindung liegt nun die Aufgabe zugrunde, ein Personenfunkrufsystem der eingangs genannten Art anzugeben, das in einem Nachrichtenvermittlungsnetz, in dem es integriert ist, die vorhandenen Übertragungskanäle möglichst wenig beansprucht.

Erfindungsgemäß wird diese Aufgabe durch die Merkmale des Anspruchs 1 gelöst. Zweckmäßige Weiterbildungen der Erfindung gehen aus den Unteransprüchen hervor.

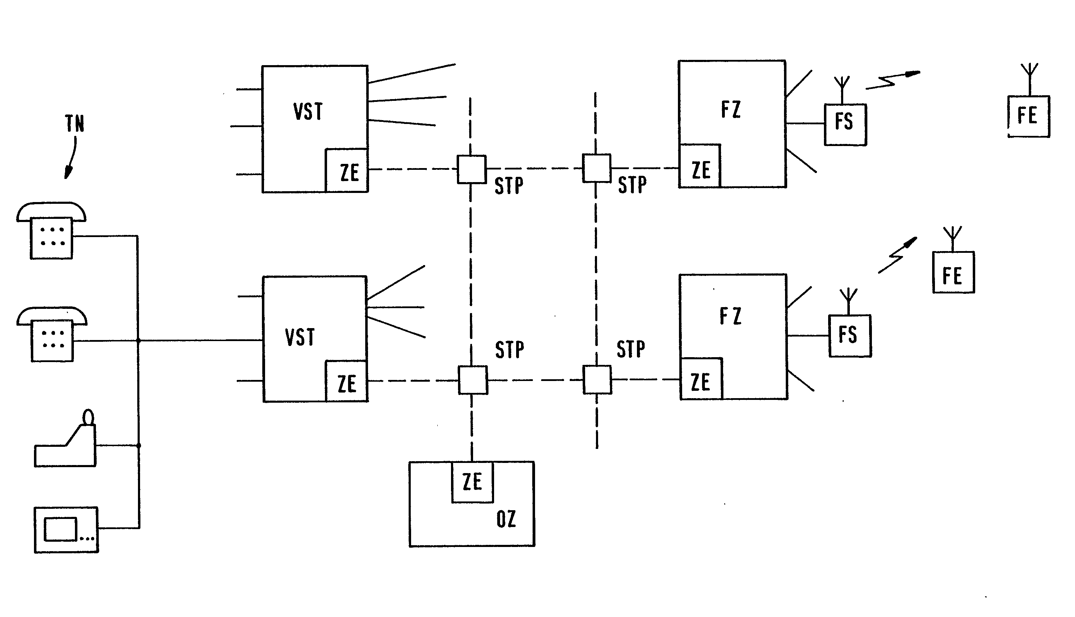

Anhand eines in der Zeichnung dargestellten Ausführungsbeispiels wird nachfolgend die Erfindung näher erläutert.

Die einzige Figur der Zeichnung stellt ein Nachrichtenvermittlungsnetz, im speziellen Fall ein ISDN-Netz (Integrated Services Digital Network) dar, welches einen durch die unterbrochenen Linien angedeuteten zentralen Zeichengabekanal aufweist. Mit den Vermittlungsstellen VST des ISDN-Netzes sind einerseits die Teilnehmergeräte TN (z.B. Fernsprechapparate, Bildschirmtext-, Telefax-, Teletexgeräte) und andererseits Funkrufzentralen FZ verbunden. An den Personenfunkrufzentralen FZ sind ein oder mehrere Funkrufsender FS angeschlossen, welche die Funkrufe zu den Personenfunkrufempfängern FE aussenden.

Soll eine bestimmte mit einem Personenfunkrufempfänger FE ausgestattete Person gerufen werden, so wird als Rufauftrag von einem mit dem ISDN-Netz verbundenen Teilnehmergerät TN aus die Kennzahl derjenigen Personenfunkrufzentrale FZ, der der gesuchte Personenfunkrufempfänger FE zugeordnet ist, und dessen Rufnummer eingegeben. Der Kennzahl und der Rufnummer können auch noch Rufinformationen für die gesuchte Person hinzugefügt werden. Für solche Rufinformationen kommen numerische bzw. alphanumerische Zeichen, beispielsweise die Teilnehmernummer des rückzurufenden Teilnehmergerätes TN, in Frage, welche z.B. auf einem am Personenfunkrufempfänger vorhandenen Anzeigefeld darstellbar sind. Die in das Teilnehmergerät TN eingegebene Kennzahl, die Rufnummer und evtl. noch zusätzliche Rufinformationen gelangen über eine Übertragungsstrecke zunächst zu einer Vermittlungsstelle VST des ISDN-Netzes und von dort aus zu einer oder mehreren Personenfunkrufzentrale(n) FZ, wo die Rufnummer und die zusätzlichen Rufinformationen in einem Speicher aufgenommen werden. Der oder die mit der(den) Personenfunkrufzentrale(n) FZ in Verbindung stehende(n) Funkrufsender FS sendet(senden) die Rufnummer und die Rufinformationen aus, worauf sie von dem betreffenden Personenfunkrufempfänger FE empfangen werden. Damit ist die Rufprozedur beendet. Wie der Zeichnung zu entnehmen ist, sind die Personenfunkrufzentralen FZ lediglich über den strichliert gezeichneten zentralen Zeichengabekanal mit den Vermittlungsstellen VST des ISDN-Netzes verbunden. D.h., neben der Signalisierungsinformation (Kennzahl, Rufnummer) werden auch zusätzliche Rufinformationen in Form numerischer oder alphanumerischer Zeichen über den zentralen Zeichengabekanal übermittelt, so daß die Sprach- und Datenkanäle - sie sind als durchgezogene Linien an den Vermittlungsstellen VST angedeutet - für den Personenfunkruf überhaupt nicht benutzt werden und somit für andere Vermittlungsdienste frei bleiben.

Betriebs- und Verwaltungsdaten für das Personenfunkrufnetz, welche von einer Organisationszentrale OZ erzeugt und weitergegeben werden, werden ebenfalls über den zentralen Zeichengabekanal übertragen. So legt z.B. die Organisationszentrale fest, an welche Personenfunkrufzentrale(n) ein Funkruf jeweils übergeben werden soll. Auch können die Funkrufzentralen FZ über den zentralen Zeichengabekanal untereinander Funkrufinformationen austauschen.

Zeichengabetransferpunkte STP im zentralen Zeichengabekanal ermöglichen die Durchvermittlung von Daten zwischen den Vermittlungsstellen VST, den Personenfunkrufzentralen FZ und der Organisationszentrale OZ.

Alle mit dem zentralen Zeichengabekanal in Verbindung stehende Einheiten, die Vermittlungsstellen VST, die Personenfunkrufzentralen FZ und die Organisationszentrale OZ sind mit Zeichengabeendeinrichtungen ZE ausgestattet, die speziell für die Ein- und Ausgabe von Signalisierungsinformationen (Kennzahl, Rufnummer, Betriebsund Verwaltungsdaten) und von Rufinformationen (z.B. Nummer des zurückzurufenden Teilnehmers) konzipiert sind.

## Ansprüche

1. Personenfunkrufsystem, das mindestens eine Personenfunkrufzentrale (FZ) mit mindestens einem daran angeschlossenen Funkrufsender (FS) und mehrere Personenfunkrufempfänger (FE) aufweist, wobei die Personenfunkrufzentrale (FZ) mit einem Nachrichtenvermittlungsnetz in Verbindung steht, das einen zentralen Zeichengabekanal besitzt, über den die jeweilige Personenfunkrufzentrale (FZ) von zum Nachrichtenvermittlungsnetz gehörenden Vermittlungsstellen (VST), an denen für Rufeingaben geeignete Teilnehmergeräte angeschlossen sind, Signalisierungsinformationen erhält, dadurch gekennzeichnet, daß über den zentralen Zeichengabekanal auch die Übertragung numerischer oder alphanumerischer Zeichen erfolgt, die als Rufinformation für einen gerufenen Personenfunkrufempfänger (FE) bestimmt sind.

2. Personenfunkrufsystem nach Anspruch 1, dadurch gekennzeichnet, daß ein Austausch von Rufinformationen oder Signalisierungsinformationen zwischen mehreren Personenfunkrufzentralen (FZ) auch über den zentralen Zeichenkanal erfolgt.

EP 0 354 396 A2

BK 88/4